# EUROPEAN PATENT APPLICATION

(11) **EP 1 609 347 A1**
(43) Date of publication of application: **28.12.2005**
(21) Application number: 05252752.0
(22) Date of filing: 04.05.2005
(51) Int. Cl.: A01D 34/62

(54) **Bedknife assembly for a mower**

(30) Priority: 04.05.2004 US 568124 P; 04.05.2004 US 838862; 10.01.2005 EP 05250076; 28.04.2005 US 116765
(71) Applicant: TEXTRON INC., Providence, Rhode Island 02903 (US)
(72) Inventor: Mahan, Jonathan Dohme F., Charlotte, North Carolina 28273 (US); Berkeley, James E., Pineville, North Carolina 28134 (US)
(74) Representative: Moir, Michael Christopher

(57) **Abstract**

A reel mower assembly including at least one magnetized backing plate mounted to a frame of a greensmower, a bedknife retainer magnetically retained in proximity to the backing in an operating position, and a bedknife interposed between the backing and the bedknife retainer such that the bedknife is oriented in cutting relationship with the reel.

## Description

### CROSS-REFERENCE TO RELATED APPLICATIONS

This application claims the benefit of U.S. Provisional Application No. 60/568,124, filed on May 4, 2004. The disclosure of the above application is incorporated herein by reference.

### FIELD OF THE INVENTION

The present invention relates to a reel mower, and more particularly, to a disposable magnetic bedknife for a reel mower.

### BACKGROUND OF THE INVENTION

Reel mowers use a scissoring action, rather than a tearing action, to shear grass and like foliage. Such reel mowers typically provide a high quality cut, but require more maintenance than rotary mowers. Golf course superintendents prefer such mowers where appearance and healthy grass are important, such as on golf greens.

In a typical reel mower assembly, an attachment member, commonly called a bed bar or backer, attaches to the apparatus in rigid relationship to the reel, and a replaceable bedknife attaches to the bed bar. The bedknife is maintained parallel to the reel axis and in close proximity to the reel knives so that the reel and the bedknives achieve a quality sheering action. Typically, an adjustment mechanism allows movement of the bed bar relative to the reel so that the bedknife can be moved into proper relationship with the rotating reel.

Conventionally, the bedknife attaches to the bed bar with a plurality of screws placed through holes in the bedknife, and by further engaging threaded holes in the bed bar. Such conventional arrangements typically use ten or more screws to attach the bedknife to the bed bar. Thus, replacing the bedknife requires removing the screws, changing the bedknife, and screwing the new bedknife to the bed bar. Typically, the bedknife attaches to the underside of the bed bar so that the mower must be sufficiently raised or partially disassembled to access the underside of the reel mower assembly to remove the screws and the bedknife. A reel mower unit used in a typical golf course application may use multiple reel mower assemblies. Changing bedknives on a reel mower, especially a mower with multiple reels, requires significant manual labor time and corresponding downtime.

When the bedknife is screwed to the bed bar, stones or similar debris entering the mower can jam between the fixed bedknife and the reel, damaging one or more portions of the reel mower assembly. Bedknives may also sustain damage when contacting a substantially buried obstruction. Damage to the bedknife can be quite costly and problematic, given the close tolerances required for proper operation. Furthermore, a bedknife tends to dull the more often it is used. Grinding a new cutting edge onto a bedknife also requires time and expertise, thereby increasing maintenance costs.

### SUMMARY OF THE INVENTION

Aspects of the invention are defined in Claims 1 and 12. Preferred features of these aspects are defined in their respective dependent claims.

Another aspect of the present invention provides a reel mower assembly comprising a reel mower rotatably mounted to a frame, a drive operative to rotate the reel about a reel axis, at least one magnetized backing mounted to the frame, a bedknife retainer magnetically retained in proximity to the backing in an operating position, and a bedknife interposed between the backing and the bedknife retainer such that the bedknife is oriented in cutting relationship with the reel, and an engagement device operative to prevent sliding movement of the bedknife with respect to the backing while allowing the retainer to move away from the backing when a separating force is exerted on the retainer in a direction away from the backing that is greater than an attractive force exerted on the retainer by the backing when the retainer is in the operating position.

Another aspect of the present invention provides a reel mower comprising: a reel mower rotatably mounted to a frame; a drive operative to rotate the reel about a reel axis; at least one magnetized backing mounted to the frame; a bedknife retainer magnetically retained in proximity to the backing in an operating position; a bedknife carried by the bedknife retainer; and an engagement device operative to prevent sliding movement of the retainer with respect to the backing while allowing the backing to move away from the magnet when a separating force is exerted on the retainer in a direction away from the retainer that is greater than an attractive force exerted on the retainer by the backing when the retainer is in the operating position.

Another aspect of the present invention provides a reel mower assembly comprising a frame, a primary mover attached to the frame for displacing the mower, a power source supported by the frame for operating the primary mover, a reel mower rotatably mounted to the frame, a drive operative to rotate the reel about a reel axis, and at least one magnetized backing mounted to the frame. The reel mower assembly further includes a bedknife retainer magnetically retained in proximity to the backing in an operating position, and a bedknife interposed between the backing and the bedknife retainer such that the bedknife is orientated in cutting relationship with the reel.

Preferably, the reel mower assembly further includes an engagement device operative to prevent sliding movement of the retainer with respect to the backing while allowing the backing to move away from the magnet when a separating force is exerted on the retainer in a direction away from the retainer that is greater than an attractive force exerted on the retainer by the backing when the retainer is in the operating position.

Another aspect if the present invention provides a reel mower assembly comprising: a frame; a primary mover attached to the frame for displacing the mower; a power source supported by the frame for operating the primary mover; a reel mower rotatably mounted to the frame; a drive operative to rotate the reel about a reel axis; at least one magnetized backing mounted to the frame; a bedknife retainer magnetically retained in proximity to the backing in an operating position; and a bedknife carried by the bedknife retainer.

Further areas of applicability will become apparent from the detailed description provided hereinafter. It should be understood that the detailed description and specific examples, while indicating the various embodiments of the invention, are intended for purposes of illustration only and are not intended to limit the scope of the invention.

### BRIEF DESCRIPTION OF THE DRAWINGS

This application will become more fully understood from the detailed description and the accompanying drawings, wherein:
FIG. 1 is an exploded perspective view of a walk-behind reel mower arranged in accordance with various embodiments;
FIG. 2 is an exploded perspective view of a reel mower assembly constructed in accordance with various embodiments;
FIG. 3 is a perspective view of the top of a magnetic bed bar in accordance with some embodiments;
FIG. 4 is a perspective view of the underside of the bed bar in FIG. 3;
FIG. 5 is a perspective view of a bedknife for attachment to the magnetic bed bar of FIG. 3;
FIG. 6 is a schematic view of the bedknife of FIG. 5 in the operating position on the magnetic bed bar of FIG. 3;
FIG. 7 is a schematic view of an alternative bedknife in the operating position on the magnetic bed bar of FIG. 3;
FIG. 8 is a plan view of a bed knife according to a first method of manufacture;
FIG. 9 is a cross sectional view of the bed knife of FIG. 8;
FIG. 10 is a plan view of the blank used in forming the bed knife of FIG. 8;
FIG. 11 is a plan view of the bed knife of FIG. 8 following multiple grinding operations;
FIG. 12 is a cross sectional view of the bed knife of FIG. 11;
FIG. 13 is a plan view of the bed knife of FIG. 11 following the final grinding operation;
FIG. 14 is a cross sectional view of the bed knife of FIG. 13
FIG. 15 is a plan view of a bed knife according to a second method of manufacture; and
FIG. 16 is a cross sectional view of the bed knife of FIG. 15.

### DETAILED DESCRIPTION OF THE EMBODIMENTS

The following description of the embodiments is merely exemplary in nature and is in no way intended to limit the embodiment(s), application, or uses described herein.

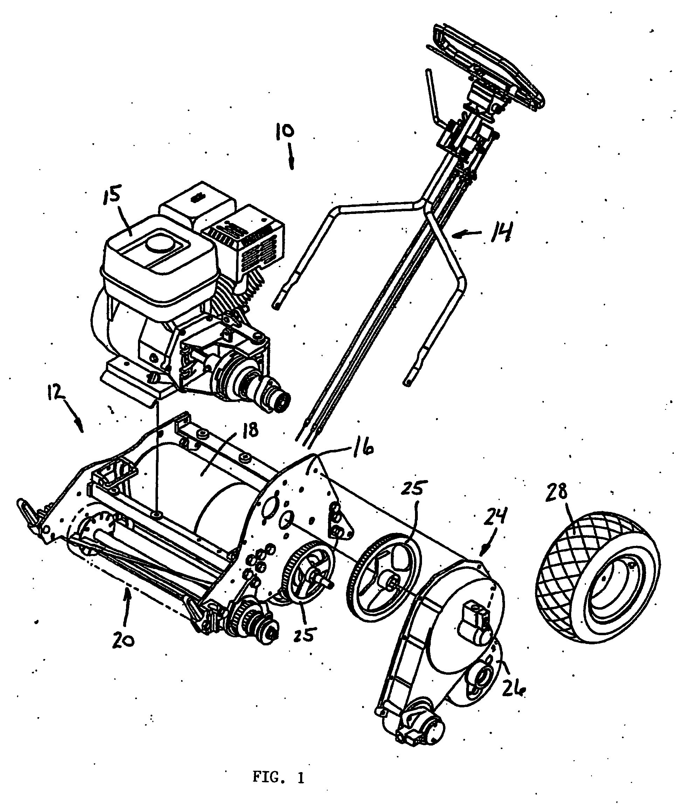

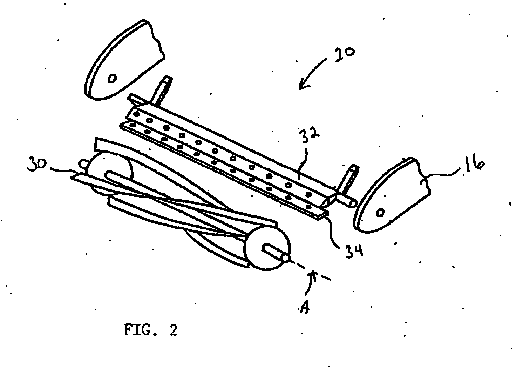

FIG. 1 shows the basic components of a mower 10 constructed in accordance with the various embodiments. Mower 10 is shown as a walk-behind mower; however, mower 10 can be any variety of reef-type greensmower, including single and multiple reel-type mowing devices. Mower 10 includes cutting unit 12, which comprises a power source or engine 15 coupled to a frame 16, and a handle 14 coupled to frame 16. A traction roller 18 is rotatably coupled to frame 16 and drivingly connected to engine 15. Cutting unit 12 further includes a reel mower assembly 20, described in detail with respect to FIGS. 2 - 5. A transmission 24 includes a plurality of sprockets 25 selectively transferring rotational output torque of engine 15 to traction roller 18. Transmission 24 includes a clutch 26 positioned intermediate engine 15 and transmission 24. Clutch 26 operates in an engaged and disengaged mode for selectively transferring power from engine 15 to traction roller 18. Wheels 28 are coupled to traction roller 18 and are also selectively driven by engine 15 to provide motive force for translating walk-behind greensmower 10, typically during a transportation mode of operation.

FIG. 2 schematically illustrates the major parts of reel mower assembly 20. Reel mower assembly 20 comprising a mower reel 30 mounted to frame 16 to enable relative rotational movement. Reel mower assembly 20 is commonly found on various types of mowers, including riding mowers and walk-behind mowers. A drive rotates reel 30 about a reel axis A. A magnetic bed bar 32 attaches to frame 16, and bedknife 34 magnetically attaches to magnetic bed bar 32. Typically, reel 30 further includes an adjustment mechanism to vary the position of magnetic bed bar 32 with respect to reel 30 in order to provide the proper cutting relationship between bedknife 34 and reel 30.

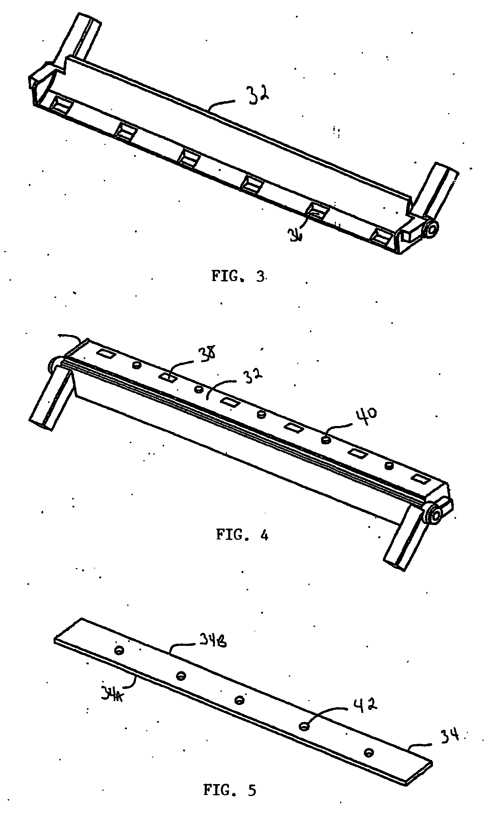

FIGS. 3 and 4 show some embodiments of magnetic bed bar 32 in accordance with some embodiments. Magnetic bed bar 32 includes a plurality of magnets 36. Magnets 36 are embedded into magnetic bed bar 32 providing a substantially flush surface 38 for connecting bedknife 34. Bedknife 34 is magnetically maintained against magnets 36 in an operating position through the use of locating pins 40.

FIG. 5 illustrates a bedknife 34 constructed in accordance with some embodiments. Bedknife 34 includes a first cutting edge 34A and a second cutting edge 34B. Cutting edges 34A and 34B are formed on opposite sides of bedknife 34, allowing only one cutting edge 34A to be in operation at any time. As cutting edge 34A dulls, bedknife 34 can be reversed operationally orient the other cutting edge 34B. After both cutting edges 34A and 34B are dulled, bedknife 34 may be removed, discarded, and replaced. Bedknife 34 also includes notches 42 for engaging locating pins 40 of magnetic bed bar 32. While locating pins 40 and notches 42 are properly aligned, bedknife 34 is not able to slide out of position relative to magnetic bed bar 32.

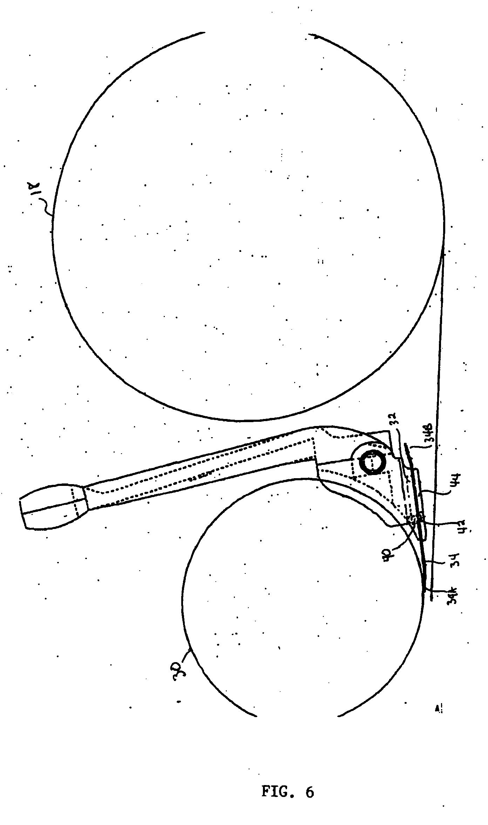

FIG. 6 shows some embodiments of the magnetic bedknife assembly. Bedknife 34 magnetically attaches to magnetic bed bar 32. Locating pins 40 of bed bar 32 engage notches 42 of bedknife 34 and magnetic backing plate 44 to ensure the proper cutting relationship between bedknife 34 and reel 30. Magnetic backing plate 44 provides additional magnetic attraction between magnetic bed bar 32 and bedknife 34 to prevent bedknife 34 from disconnecting from bed bar 32.

In certain applications, selection of the magnetic backing plate 44 may impact the operation of reel mower assembly 20. Depending on the length and thickness of the grass, different strength magnetic backing plates 44 may be needed. For example, a weaker magnetic backing plate 44 could be used for cutting the green on a golf course when the grass is shorter and damage to reel mower assembly 20 is less likely. Cutting thick grass may require extra magnetic force to prevent bedknife 34 from disconnecting from magnetic bed bar 32. This requires a stronger magnetic backing plate 44. Although additional magnetic force is provided by magnetic backing plate 44, the magnetic force still allows bedknife 34 to disconnect from magnetic bed bar 32 to prevent damage to reel mower assembly 20. Magnetic backing plate 44 may be formed from steel, and bedknife 34 is formed from a more flexible material, such as tempered spring steel.

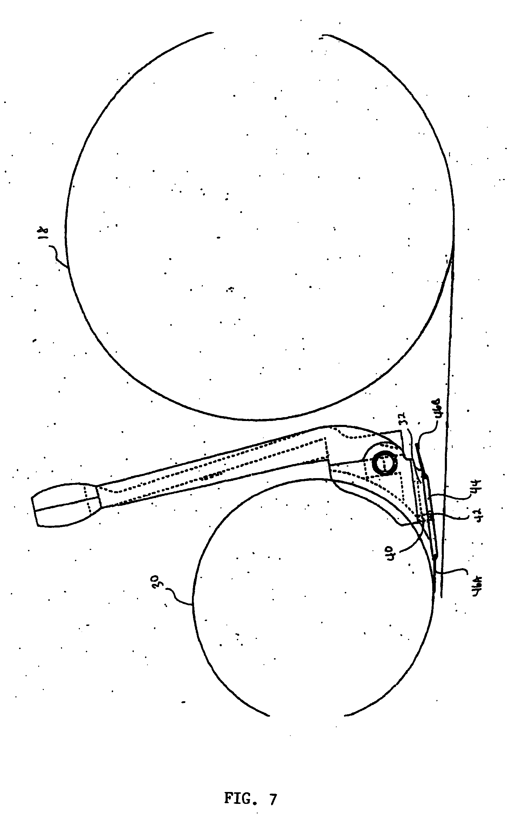

As depicted in FIG. 6, bedknife 34 may be formed from one piece of a material. Alternatively, FIG. 7 shows a second configuration of the bedknife assembly in accordance with some embodiments. FIG. 7 includes a magnetic bed bar 32 magnetically attached to magnetic backing plate 44. Locating pins 40 of magnetic bed bar 32 engage notches 42 formed on magnetic backing plate 44. This engagement ensures that bedknives 46A and 46B are in proper cutting relationship to reel 30. In the second configuration, a pair of bedknives 46A and 46B are bonded to opposite ends of backing plate 44. Securing bedknives 46A and 46B to the magnetic backing plate 44 could be any bonding method, such as gluing or staking.

As previously stated, first and second bedknives 46A and 46B are bonded to magnetic backing plate 44. Only one bedknife 46A is necessary, however, if first bedknife 46A dulls, magnetic backing plate 44 can be reversed to operationally orient second bedknife 46B to provide a cutting edge. Magnetic backing plate 44 may be formed from steel, and first and second bedknives 46A and 46B are formed from a more flexible material, such as tempered spring steel.

The embodiments described herein could be practiced in a number of fashions including by manufacturing new reel cutting assemblies in accordance with some embodiments, or alternatively, by producing a retrofit bed bar or support frame kit which would allow the magnetic blade attachment of various embodiments to be implemented on an existing mower.

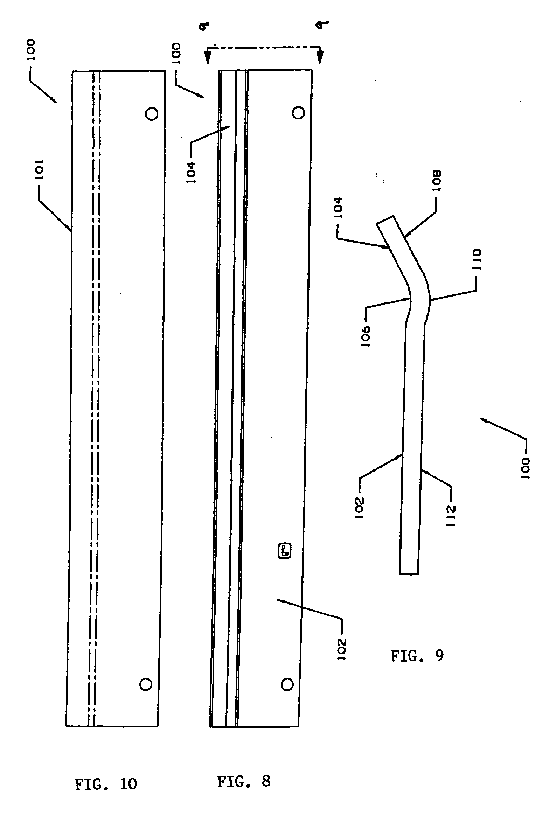

Additionally, magnetic bed knife 18 of various embodiments could be manufactured according to various manufacturing processes. More particularly, as seen in FIGS. 8-14, bed knife 18 may be made of carbon steel, specifically AISI 1566 Hot Rolled Pickled and Oiled steel or other suitable material, which is generally referenced at numeral 100. Carbon steel bed knife 100, like bed knife 18, is adapted to be magnetically held against magnets 20 in an operating position on bed bar 16 as illustrated in FIG. 6 such that bed knife 100 is oriented in cutting relationship with reel 2 in the same fashion as bed knife 18.

With particular reference to FIGS. 8-14, the manufacturing steps of carbon steel bed knife 100 will now be discussed in detail. A generally planar blank 101 is first cut to length. Planar blank 101 is then fed through a stamping or pressing machine that first flattens and straightens planar blank 101 and then imparts a bending force upon the blank. Although this shape can vary among reel mowers, the present shape of bed knife 100 includes a generally planar mounting portion 102 and an upturned cutting portion 104. As best seen in FIG. 9, upturned cutting portion 104 initially includes a radius portion 106 interconnecting a distal end 108 with mounting portion 102. Specifically, as a result of the stamping process used to form carbon steel, radius portion 106 includes an outer surface 110 that, as seen in FIG. 9, extends below a lower surface 112 of mounting portion 102. As should be appreciated by one skilled in the art, this condition of outer surface 110 extending below lower surface 112 is undesirable as it may impede proper turf cutting and/or may contact the ground surface. Furthermore, this condition may further limit the reel mower's minimum cutting height. Accordingly, it is preferable to grind off this outer surface 110 to define a generally unobstructed lower surface.

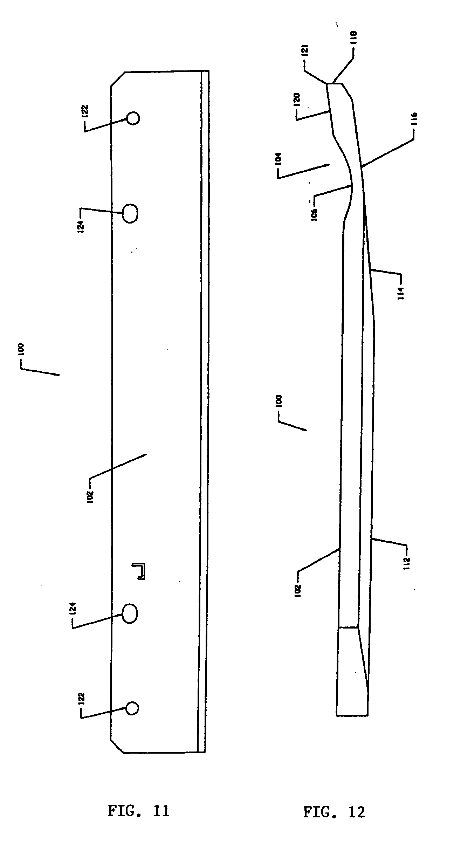

As best seen in FIGS. 11 and 12, bed knife 100 is illustrated following completion of a series of grinding operations sufficient to remove outer surface 110 and define a plurality of faces to create a final desired shape. Specifically, as seen in FIG. 12, bed knife 100 includes a tournament cut face 114 extending upwardly from lower surface 112 of mounting portion 102. Preferably, tournament cut face 114 extends upwardly from lower surface 112 at a relative angle of about between 3 degrees and 8 degrees, such as 5 degrees. Tournament cut face 114 transitions into a super tournament cut face 116 that extends further upwardly at a greater inclination of about 8 degrees relative to lower surface 112. Bed knife 100 includes a front face 118, which is at generally perpendicular, such as at about 90 degrees relative to lower surface 112, and a top face 120, which is at about between about 5 degrees to 15 degrees, such as 8 to 10 degrees relative to lower surface 112. Front face 118 and top face 120 intersecting at an edge 121. Tournament cut face 114, super tournament cut face 116, front face 118, and top face 120 are each formed through various grinding operations that requires bed knife 100 to be fed through a milling machine. Following these grinding operations, bed knife 100 is then heat-treated to provide sufficient hardness to reduce the wear of bed knife 100 during operation.

Referring now to FIG. 11, following heat treatment, bed knife 100 further includes a pair of apertures 122 formed through mounting portion 102. This pair of apertures 122 is used during manufacturing to position bed knife 100 during subsequent grinding operations. Additionally, a second pair of apertures 124 is formed through mounting portion 102. This second pair of apertures 124 is sized, similar to holes 28, to receive pegs 26 of bed bar 16.

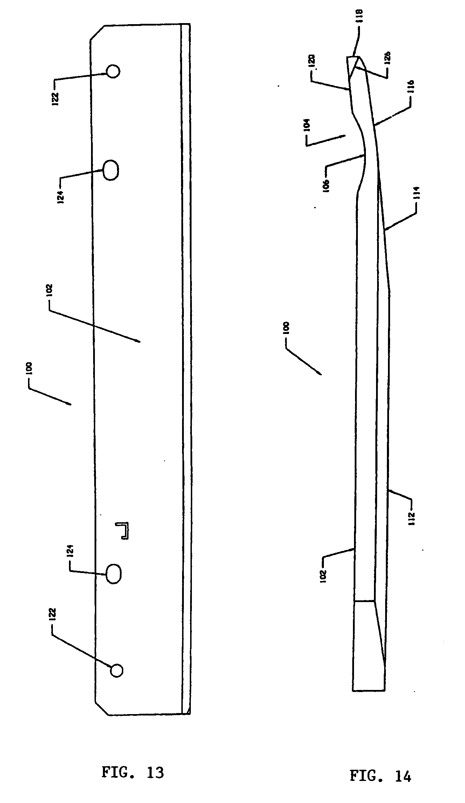

Finally, as seen in FIGS. 13 and 14, a final grind of bed knife 100 is completed. Specifically, through a subsequent grinding operation, following heat treatment, top face 120 is finish ground down such that it is about in the range of 3 degrees to 8 degrees, such as at about 5.5 degrees inclined relative to lower surface 112. Similarly, front face 118 is ground down to create a cutting edge 126 in place of edge 121. The particular inclination of cutting edge 126 is dependent upon the desired cutting configuration relative to reel 2.

Although bed knife 100 provides a number of beneficial cutting properties and prolonged wear, the manufacturing thereof may lead to undesirably high costs and complexity. Therefore, some embodiments provide a method of manufacturing the bed knife which is capable of eliminating many of the grinding steps, heat treatment, and complexity of construction.

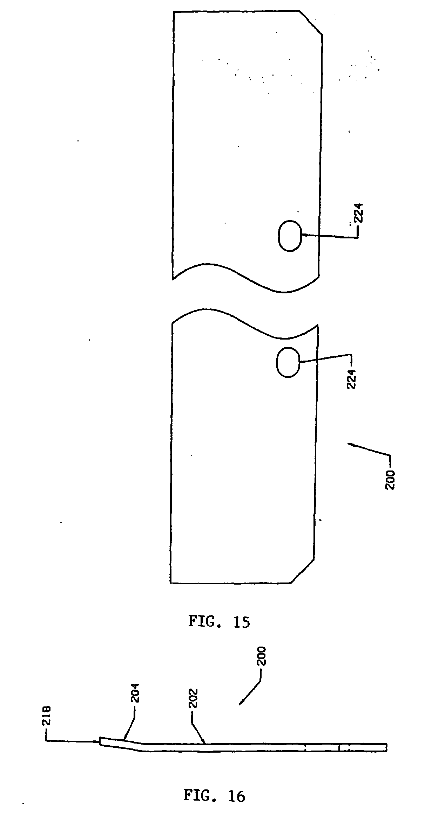

With particular reference to FIGS. 15 and 16, a bed knife 200 is illustrated being manufactured from a simplified process. More particularly, bed knife 200 is made of spring steel, specifically C1095 Scaleless Blue-Tempered Spring Steel, ASTM A682, which is hardened to a minimum Rockwell number of about 47C. Spring steel bed knife 200, like bed knifes 18 and 100, is adapted to be magnetically held against magnets 20 in an operating position on bed bar 16 as illustrated in FIG. 6 such that bed knife 200 is oriented in cutting relationship with reel 2 in the same fashion as bed knife 18.

Still referring to FIGS. 15 and 16, the manufacturing steps of spring steel bed knife 200 will now be discussed in detail. As will be appreciated, the manufacturing steps of spring steel bed knife 200 are dramatically simplified relative to bed knife 100, thereby leading to reduced manufacturing complexity and cost. A generally planar blank (not shown) is fed into a cold roll-forming machine that imparts a bending force upon the blank. Preferably, the planar blank is a roll of spring steel that can quickly and easily be shaped in a continuous, uninterrupted process. As best seen in FIGS. 15 and 16, the blank is shaped through a series of rollers into a desired shape. Due to the nature of spring steel, this shaping process may require one or more bending and over bending operations to produce the desired final shape.

Although the final shape can vary among reel mower designs, the present shape of bed knife 200 includes a generally planar mounting portion 202 and an upturned cutting portion 204. As best seen in FIG. 16, upturned cutting portion 204 extends upwardly from mounting portion 202 at a relative angle of about 9 degrees. As can be appreciated from the figures, unlike bed knife 100 that includes downwardly protruding outer surface 110 of radius portion 106 caused during the stamping process, the cold roll forming process of some embodiments does not create such effect, thereby eliminating the need to grind tournament cut face 114 and super tournament cut face 116. Therefore, the use of spring steel permits the use of roll forming rather than stamping, which eliminates a number of grinding operations, but for a final grind of front face 218 to define a cutting surface.

As seen in FIG. 15, bed knife 200 further includes a pair of apertures 224 are formed through mounting portion 202. This pair of apertures 224 is sized, similar to holes 28, to receive pegs 26 of bed bar 16.

Spring steel bed knife 200 provides a number of advantages over conventional screw-on bed knives and, even, bed knife 100. Specifically, bed knife 200, being made of spring steel, enables it to be made according to a simple cold roll forming technique. This technique, which has not been used before to form magnetic bed knives, dramatically simplifies the manufacturing process, thereby eliminating the need for complex flattening, straightening, forming, grinding, and heat-treating operations.

The description of the embodiment(s) is merely exemplary in nature and, thus, variations that do not depart from the gist of the various embodiments are intended to be within the scope of the various embodiments. Such variations are not to be regarded as a departure from the spirit and scope of the invention.

Each feature disclosed in this specification (which term includes the claims) and/or shown in the drawings may be incorporated in the invention independently of other disclosed and/or illustrated features.

The text of the abstract filed herewith is repeated here as part of the specification.

A reel mower assembly including at least one magnetized backing plate mounted to a frame of a greensmower, a bedknife retainer magnetically retained in proximity to the backing in an operating position, and a bedknife interposed between the backing and the bedknife retainer such that the bedknife is oriented in cutting relationship with the reel.

## Claims

1. A bedknife assembly for a reel mower comprising:
at least one backing for mounting to a frame of the mower;
a bedknife retainer magnetically retained in proximity to the backing in an operating position; and
a bedknife carried or located by the bedknife retainer such that in operation the bedknife is disposed in cutting relationship with the reel.

2. The assembly of Claim 1 wherein the bedknife is interposed between the backing and the bedknife retainer.

3. The assembly of Claim 2 comprising an engagement device operative to prevent sliding movement of the bedknife with respect to the backing while allowing the retainer to move away from the backing when a separating force is exerted on the retainer in a direction away from the backing that is greater than an attractive force exerted on the retainer when the retainer is in the operating position.

4. The assembly of Claim 1 wherein the bedknife is carried by the bedknife retainer.

5. The assembly of Claim 4 comprising a second bedknife carried on the retainer, the second bedknife being carried opposite the first bedknife.

6. The assembly of Claim 4 or 5 wherein the or each bedknife is glued to the retainer.

7. The assembly of any of Claims 4 to 6 wherein the or each bedknife is staked to the retainer.

8. The assembly of any preceding Claim wherein the or each bedknife has a first side and a second side, each side arranged to provide a cutting function, and wherein the or each bedknife may be oriented so that one of the first and second sides provides the cutting function.

9. The assembly of any preceding Claim wherein the or each bedknife is formed of a material more flexible than the retainer.

10. The assembly of any preceding Claim wherein the or each bedknife is tempered spring steel.

11. The assembly of any preceding Claim wherein the or each bedknife is replaceable.

12. The assembly of any of Claims 4 to 7, or of Claims 8 to 11 when dependent on Claims 4 to 7, comprising an engagement device operative to prevent sliding movement of the retainer with respect to the backing while allowing the backing to move away from the magnet when a separating force is exerted on the retainer in a direction away from the retainer that is greater than an attractive force exerted on the retainer by the backing when the retainer is in the operating position.

13. The assembly of any of Claims 3 or 12 wherein the engagement device comprises a plurality of locating members formed on the backing.

14. The assembly of any of Claims 3, 12 or 13 wherein the engagement device comprises a plurality of apertures formed in the retainer for engaging the locating members to the backing.

15. The assembly of any preceding claim wherein a magnetic attraction between the backing and the retainer may be varied in accordance with selection of at least one of the retainer and the backing.

16. The assembly of any preceding claim wherein the retainer is selected from a plurality of retainers of varying thickness.

17. A reel mower comprising:
a reel mower rotatably mounted to a frame;
a drive operative to rotate the reel about a reel axis;
at least one magnetized backing mounted to the frame; and
the bed knife assembly of any preceding claim.

18. The reel mower of Claim 17 comprising:
the frame;
a prime mover attached to the frame for propelling the mower; and
a power source supported by the frame for operating the prime mover.

19. The reel mower of Claim 17 or 18 being either one of a riding or walk-behind mower.
